# EUROPEAN PATENT APPLICATION

(11) **EP 4 293 081 A1**
(43) Date of publication of application: **20.12.2023**
(21) Application number: 21925857.1
(22) Date of filing: 22.12.2021
(51) Int. Cl.: C08L 83/05, C08L 83/07, C09J 183/07

(54) **CURABLE SILICONE COMPOSITION, AND ADHESIVE**

(30) Priority: 09.02.2021 JP 2021019060
(71) Applicant: SHIN-ETSU CHEMICAL CO., LTD., Tokyo 1000005 (JP)
(72) Inventor: KIMURA Shinji, Annaka-shi, Gunma 379-0224 (JP); OZAI Toshiyuki, Annaka-shi, Gunma 379-0224 (JP)
(74) Representative: Sonnenhauser, Thomas Martin
(86) International application number: PCT/JP2021/047680
(87) International publication number: WO 2022/172614

(57) **Abstract**

The present invention is a curable silicone composition including (A) an organopolysiloxane being an addition reaction product of (a) a compound represented by the following general formula (1) and (b) a compound represented by the following general formula (2), and having an average of 4 or more methacrylic groups within one molecule; 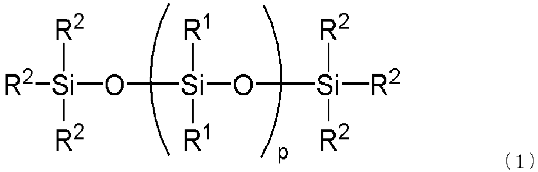 wherein p is an integer of 10 or more, R¹ is a monovalent organic group having 1 to 12 carbon atoms, and R² is an alkenyl group having 2 to 12 carbon atoms, 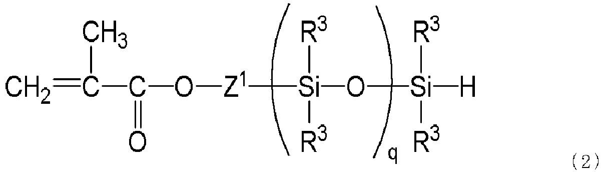 wherein q is an integer of 0 to 20, R³ is a monovalent organic group having 1 to 12 carbon atoms, and Z¹ is a divalent organic group having 1 to 10 carbon atoms, (B) an organic peroxide, (C) an organohydrogenpolysiloxane, and (D) a platinum group metal catalyst. This makes it possible to provide a curable silicone composition that is useful as an adhesive and that has an excellent curability and does not cause curing failure or foaming even when addition reaction catalyst poison or moisture is present on the surface of the adherend.

## Description

### TECHNICAL FIELD

The present invention relates to a curable silicone composition, and an adhesive comprising the curable silicone composition.

### BACKGROUND ART

Curable silicone compositions are widely applied to electrical and electronic components, in-vehicle parts, and the like, because of their high heat resistance, cold resistance, safety, electrical insulation property, and weather resistance. For the reaction for curing such curable silicone compositions, condensation reactions using a tin or titanium compound as a catalyst, or addition reactions using a platinum group element as a catalyst have been often performed.

Since condensation type silicones are cured by moisture in the air, a long period of time is required to cure them.

On the other hand, addition reaction type silicones are cured by heating in a short time and are excellent in workability; however, the curing of addition reaction type silicones are inhibited in some cases by addition reaction catalyst poison substances, such as nitrogen compounds, sulfur compounds, and phosphorus compounds. In addition, since addition reaction type silicones are obtained through a reaction using a hydrogen-silicon bond, if moisture is present in the reaction system, it causes a dehydrogenation reaction, resulting in the inclusion of bubbles in the cured product.

To produce an addition reaction type silicone that is capable of adhesion even in the presence of addition reaction catalyst poison, a method of using a special adhesive aid (Patent Document 1) and a method of adding peroxides (Patent Document 2) have been proposed. However, these methods were effective only when the amount of the catalyst poison was small. When the amount of the catalyst poison was large, they were not sufficiently effective.

### CITATION LIST

### PATENT LITERATURE

Patent Document 1: JP4430470B
Patent Document 2: JP4314454B

### SUMMARY OF INVENTION

### TECHNICAL PROBLEM

The present invention was accomplished in light of the circumstances described above, and an object of the present invention is to provide a curable silicone composition that is useful as an adhesive and that has excellent curability and does not cause curing failure or foaming even when addition reaction catalyst poison or moisture is present on the surface of the adherend.

### SOLUTION TO PROBLEM

In order to achieve the above object, the present invention provides a curable silicone composition, comprising:
(A) an organopolysiloxane in an amount of 100 parts by mass, the organopolysiloxane being an addition reaction product of (a) a compound represented by the following general formula (1) and (b) a compound represented by the following general formula (2), and having an average of 4 or more methacrylic groups within one molecule; 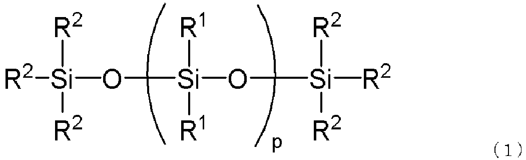 wherein p is an integer of 10 or more, R¹ is independently a substituted or unsubstituted monovalent organic group having 1 to 12 carbon atoms, and R² is independently an alkenyl group having 2 to 12 carbon atoms, 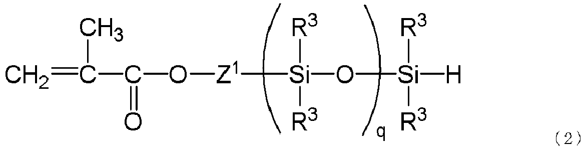 wherein q is an integer of 0 to 20, R³ is independently a substituted or unsubstituted monovalent organic group having 1 to 12 carbon atoms, and Z¹ is a substituted or unsubstituted divalent organic group having 1 to 10 carbon atoms,
(B) an organic peroxide in an amount of 0.1 to 10 parts by mass;
(C) an organohydrogenpolysiloxane in an amount of 0.1 to 20 parts by mass, the organohydrogenpolysiloxane having at least two hydrogen atoms bonded to a silicon atom within one molecule; and
(D) a platinum group metal catalyst in such an amount that platinum group metal is contained in an amount of 0.1 to 100 mass ppm relative to the entire composition.

Such a curable silicone composition has desirable curability due to the high radical reactivity of the component (A) and also has desirable surface curability because the addition reaction between the component (A) and the component (C) is advanced at the air interface where radical reactions do not easily occur.

Further, the component (A) is preferably a reaction product of a hydrosilylation reaction of the component (a) and the component (b), which uses a platinum group metal catalyst.

By using a highly active platinum group metal as a catalyst, the component (a) and the component (b) sufficiently react, thereby easily obtaining the desired structure.

Further, in an air atmosphere, the time for curing its surface is preferably longer than the time for curing its inside.

This enables to exhibit the effectiveness of the present invention more reliably.

Further, the present invention provides an adhesive that comprises the curable silicone composition described above.

Since the curable silicone composition of the present invention has excellent curability and does not cause curing failure or foaming even when addition reaction catalyst poison or moisture is present on the surface of the adherend, the curable silicone composition of the present invention is suitably used for adhesives and the like.

### ADVANTAGEOUS EFFECTS OF INVENTION

As explained above, the curable silicone composition of the present invention ensures desirable curability even on its surface that is difficult to be cured by a radical reaction, and also does not cause curing failure or foaming even when addition reaction catalyst poison or moisture is present on the surface of the adherend. Therefore, by using the curable silicone composition of the present invention, curing and bonding can be done in a short time even for the parts for which addition reaction type silicone adhesives were not previously applicable due to the inhibition in curing. This is very advantageous in terms of workability and cost reduction.

### DESCRIPTION OF EMBODIMENTS

As described above, there has been a need to develop a curable silicone composition that is useful as an adhesive and that has an excellent curability and does not cause curing failure or foaming even when addition reaction catalyst poison or moisture is present on the surface of the adherend.

The inventors of the present invention conducted extensive research to achieve the above object, and found that, by using an organopolysiloxane and an organohydrogensiloxane having a plurality of methacrylic groups at the molecular chain terminal, and performing curing by a radical polymerization reaction of the methacrylic groups by peroxide while performing an addition reaction of the methacrylic groups and Si-H groups, it is possible to obtain a curable silicone composition with excellent surface curability without causing curing failure or foaming even in the presence of addition reaction catalyst poison or moisture. With this finding, the inventors completed the present invention.

Specifically, the present invention is a curable silicone composition, comprising:
(A) an organopolysiloxane in an amount of 100 parts by mass, the organopolysiloxane being an addition reaction product of (a) a compound represented by the following general formula (1) and (b) a compound represented by the following general formula (2), and having an average of 4 or more methacrylic groups within one molecule; 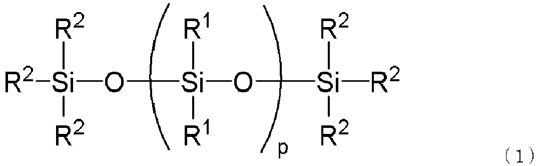 wherein p is an integer of 10 or more, R¹ is independently a substituted or unsubstituted monovalent organic group having 1 to 12 carbon atoms, and R² is independently an alkenyl group having 2 to 12 carbon atoms, 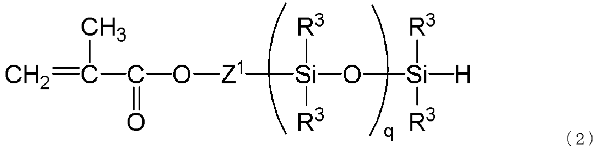 wherein q is an integer of 0 to 20, R³ is independently a substituted or unsubstituted monovalent organic group having 1 to 12 carbon atoms, and Z¹ is a substituted or unsubstituted divalent organic group having 1 to 10 carbon atoms,
(B) an organic peroxide in an amount of 0.1 to 10 parts by mass;
(C) an organohydrogenpolysiloxane in an amount of 0.1 to 20 parts by mass, the organohydrogenpolysiloxane having at least two hydrogen atoms bonded to a silicon atom within one molecule; and
(D) a platinum group metal catalyst in such an amount that platinum group metal is contained in an amount of 0.1 to 100 mass ppm relative to the entire composition.

The present invention is described below in detail; however, the present invention is not limited to the examples described below.

### Component (A)

The component (A) is an organopolysiloxane, which is an addition reaction product of (a) a compound represented by the following general formula (1) and (b) a compound represented by the following general formula (2), and has an average of 4 or more methacrylic groups within one molecule. By having a plurality of methacrylic groups localized at the molecular chain terminal, desirable curability can be obtained.

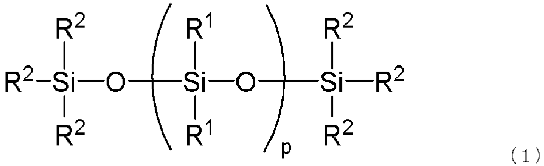

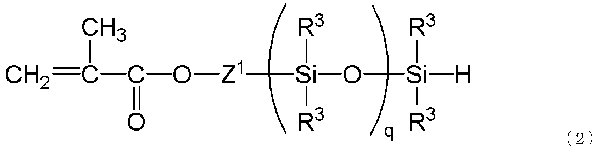

R¹ is independently a substituted or unsubstituted monovalent organic group having 1 to 12 carbon atoms. Examples thereof include an alkyl group, such as a methyl group, ethyl group, propyl group, isopropyl group, butyl group, isobutyl group, tert-butyl group, pentyl group, neopentyl group, hexyl group, cyclohexyl group, octyl group, nonyl group, or a decyl group; an aryl group such as a phenyl group, tolyl group, xylyl group, or a naphthyl group; an aralkyl group, such as a benzyl group, phenylethyl group, or a phenylpropyl group; as well as these groups in which a part or all of the hydrogen atoms are substituted with a halogen atom such as fluorine, bromine, or chlorine, a cyano group or the like, for example, a halogen-substituted alkyl group, such as a chloromethyl group, chloropropyl group, bromoethyl group, trifluoropropyl group, a cyanoethyl group, and the like. Organic groups having 1 to 8 carbon atoms are preferable, and a methyl group and a phenyl group are more preferable.

R² is independently an alkenyl group having 2 to 12, preferably 2 to 8, carbon atoms. Specific examples thereof include a vinyl group, allyl group, butenyl group, pentenyl group, and hexenyl group, and a vinyl group is particularly preferable.

p is an integer of 10 or more, and is preferably in the range of 10 to 2,000, more preferably in the range of 100 to 1,500. Within this range, the composition has desirable workability before the curing and desirable flexibility after the curing.

R³ is independently a substituted or unsubstituted monovalent organic group having 1 to 12 carbon atoms, and examples thereof include the same groups as those exemplified for R¹ above, of which methyl group is preferable.

Z¹ is a substituted or unsubstituted divalent organic group having 1 to 10 carbon atoms, and examples thereof include an alkylene group, such as a methylene group, ethylene group, a trimethylene group, and the like. In these organic groups, a part or all of the hydrogen atoms may be substituted with a halogen atom, such as fluorine, bromine, or chlorine, a cyano group, or the like. In addition, these hydrocarbon chains may contain an ether bond, an amide bond, and the like. Among these, alkylene groups having 1 to 6 carbon atoms, in particular, alkylene groups having 1 to 3 carbon atoms are preferable.

q is an integer of 0 to 20, and is preferably 1 for ease of synthesis.

Specific examples of the component (a) are shown below. In the formula below, C₆H₅ represents a phenyl group (the same hereinafter).

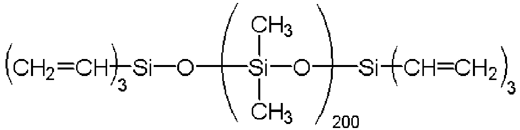

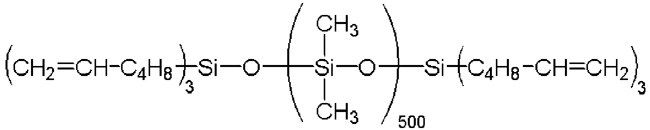

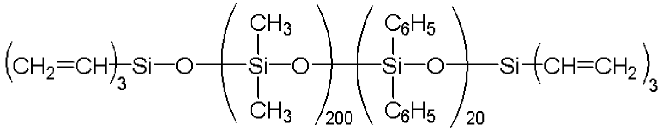

These examples of the component (a) may be used individually or in a combination of two or more kinds.

Specific examples of the component (b) are shown below.

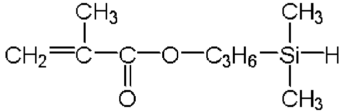

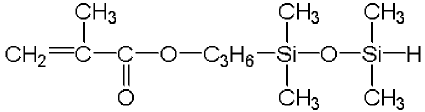

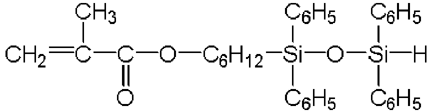

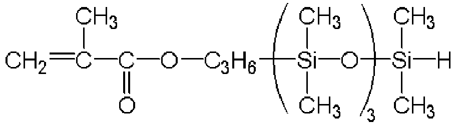

These examples of the component (b) may be used individually or in a combination of two or more kinds.

Further, the component (A) is preferably a reaction product of a hydrosilylation reaction of the component (a) and the component (b), which uses a platinum group metal as a catalyst.

A catalyst is used in the addition reaction of the component (a) and the component (b). Examples of the catalysts include platinum group metal-based catalysts, such as platinum-based catalysts including carbon powder supporting a platinum metal, platinum black, platinum tetrachloride, chloroplatinic acid, reaction products of chloroplatinic acid and monovalent alcohol, complexes of platinum and vinylsiloxane such as divinyltetramethyldisiloxane, complexes of chloroplatinic acid and olefin, and platinum-based catalysts such as platinum bisacetoacetate, palladium-based catalysts, rhodium-based catalysts, and the like. Among these, catalysts containing platinum are preferable from the viewpoint of reactivity. The conditions for the addition reaction, use of solvents, and the like are not limited and usual conditions may be used.

Specific examples of the component (A) are shown below.

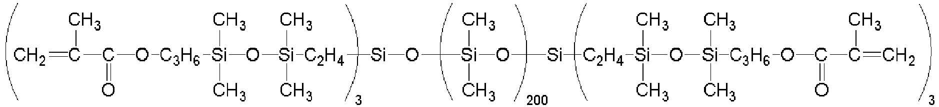

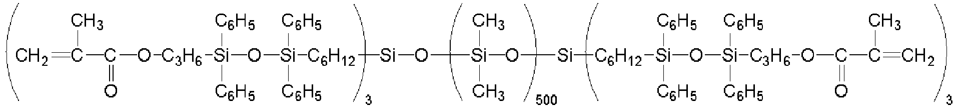

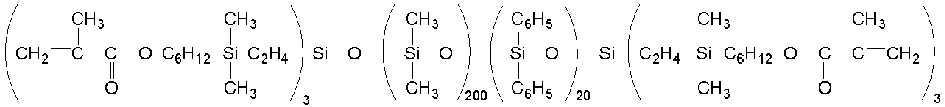

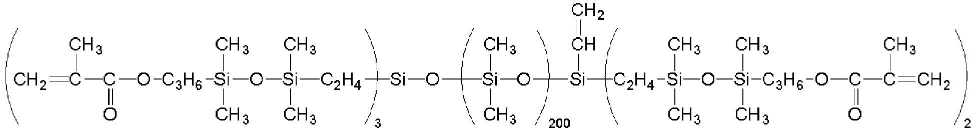

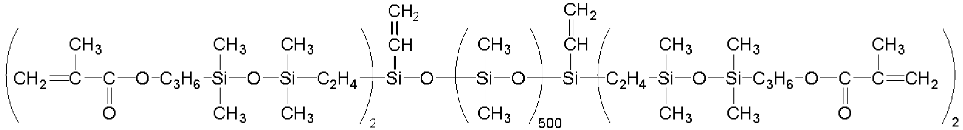

These examples of the component (A) may be used individually or in a combination of two or more kinds.

The component (A) contains an average of 4 or more methacrylic groups (2-methylprop-2-enoyl groups) derived from the component (b) within one molecule. The component (A) preferably contains 5 or more, more preferably 6 methacrylic groups. If the average number of methacrylic groups is less than 4, the curable silicone composition will have insufficient curability in deep portions.

In terms of durability, the component (A) preferably does not contain acrylic groups (prop-2-enoyl groups) that may undergo hydrolysis after the addition reaction with the Si-H groups in the component (C).

### Component (B)

The component (B) is an organic peroxide that generates radicals by heating. The component (B) is not particularly limited insofar as it is capable of polymerizing the methacrylic groups of the component (A) by a radical reaction. Examples thereof include ketone peroxide, hydroperoxide, diacyl peroxide, dialkyl peroxide, peroxyketal, alkyl perester, percarbonate, and the like.

The organic peroxide preferably has a 10-hour half-life temperature of 40°C or more, more preferably 60°C or more, in benzene, in consideration of the temperature at which the curable silicone composition is heat-cured and the storage stability. The upper limit is generally, but not particularly limited to, 200°C or less .

Examples of such an organic peroxide include 1,1-di(t-butylperoxy)cyclohexane, t-butylperoxy-3,5,5-trimethylhexanoate, 1,6-bis (t-butylperoxycarbonyloxy)hexane, 2,5-dimethyl-2,5-di(benzoylperoxy)hexane, 2,2-di(t-butylperoxy)butane, 2,5-dimethyl-2,5-di(t-butylperoxy)hexane, dibenzoylperoxide, benzoyl-m-methylbenzoylperoxide, m-toluylperoxide, and the like. These peroxides may be used individually or in a combination of two or more kinds, as appropriate. They may also be diluted with a solvent.

The amount of the organic peroxide to be contained is 0.1 to 10 parts by mass, preferably 0.2 to 8 parts by mass, per 100 parts by mass of the component (A). An amount of the organic peroxide of less than 0.1 parts by mass results in insufficient prevention of curing failure and foaming due to addition reaction catalyst poison or moisture on the surface of the adherend. An amount of the organic peroxide of more than 10 parts by mass may result in adverse effects on the storage stability and the physical properties after the curing of the composition.

### Component (C)

The component (C) is an organohydrogenpolysiloxane containing at least 2, preferably 3 to 500, more preferably 3 to 200, and particularly preferably 3 to 100 hydrogen atoms (i.e., SiH groups) bonded to a silicon atom in one molecule. The organohydrogenpolysiloxane serves to compensate for the curing at the air interface, which tends to be poorly cured in a radical polymerization due to the addition reaction with the component (A).

The number of silicon atoms within one molecule (or the polymerization degree) in the component (C) is preferably 2 to 1,000, more preferably 3 to 300, and particularly preferably 4 to 150.

The SiH group in the component (C) may be located either or both of the terminal of the molecular chain or the non-terminal of the molecular chain.

Specific examples of the organic group bonded to a silicon atom other than SiH group include unsubstituted or substituted monovalent organic groups not containing aliphatic unsaturated bonds, which are similar to those exemplified for R¹ in the component (A) above.

Preferable examples of such an organohydrogenpolysiloxane include the compound represented by the following average composition formula (3) .

R⁴_{d}HₑSiO_{(4-d-e)/2} (3)

R⁴ is an unsubstituted or substituted monovalent organic group having 1 to 12 carbon atoms, which contains no aliphatic unsaturated bonds. Examples of such a monovalent organic group include the groups similar to those exemplified for R¹ of the component (A), and preferable examples thereof include an alkyl group and an aryl group, more preferably, a methyl group and a phenyl group. d and e are positive numbers satisfying 0.7≤d≤2.1, 0.001≤e≤1.0, 0.8≤d+e≤3.0, and preferably positive numbers satisfying 1.0≤d≤2.0, 0.01≤e≤1.0, and 1.5≤d+e≤2.5.

The viscosity of the component (C) at 25°C preferably ranges from 0.5 to 100,000 mPa·s, and particularly preferably from 10 to 5,000 mPa·s. The viscosity can be measured by a rotational viscometer at 25°C, for example. The molecular structure of such an organohydrogenpolysiloxane is not particularly limited, and examples thereof include linear, branched, partially-branched linear, cyclic, or three-dimensional network structures. The organohydrogenpolysiloxane may be a homopolymer with a single kind of siloxane unit, a copolymer with two or more kinds of siloxane units, or a mixture thereof. Examples of the organohydrogenpolysiloxane include 1,1,3,3-tetramethyldisiloxane, 1,3,5,7-tetramethylcyclotetrasiloxane, methylhydrogensiloxane cyclic polymers, methylhydrogensiloxane-dimethylsiloxane cyclic copolymers, dimethylpolysiloxane with both molecular chain terminals blocked with a dimethylhydrogensiloxy group, methylhydrogenpolysiloxane with both molecular chain terminals blocked with a trimethylsiloxy group, methylhydrogensiloxane-dimethylsiloxane-diphenylsiloxane copolymers with both terminals blocked with a dimethylhydrogensiloxy group, copolymers with (CH₃)₂HSiO_{1/2} units, (CH₃)₃SiO_{1/2} units and SiO_{4/2} units, copolymers with (CH₃)₂HSiO_{1/2} units and SiO_{4/2} units, and the like.

The content of the component (C) is 0.1 to 20 parts by mass, preferably 0.5 to 20 parts by mass, and particularly preferably 1 to 10 parts by mass, per 100 parts by mass of the component (A). If the content of the component (C) is less than 0.1 parts by mass or more than 20 parts by mass, the air interface of the curable silicone composition of the present invention may be insufficiently cured and tack may remain on the surface.

Further, the molar ratio of the SiH groups in the component (C) to the alkenyl groups in the curable silicone composition of the present invention is preferably 0.01 to 5.0, more preferably 0.1 to 4.0, and particularly preferably 0.5 to 3.0.

### Component (D)

The component (D) is a platinum group metal catalyst that promotes an addition reaction. Examples of the platinum group metal catalyst include the same catalysts as those exemplified for the above component (A) that are used for the addition reaction of the component (a) and the component (b). Among them, catalysts containing platinum are preferred.

Further, the platinum group metal catalyst may be used during the synthesis in the component (A) and the remain thereof in the composition may be used as is. Otherwise, the platinum group metal catalyst may further be added to the composition.

The amount of the component (D) to be added is such that platinum group metal is contained in an amount of 0.1 to 100 ppm, preferably 0.2 to 10 ppm, relative to the mass of the entire composition. If the amount is less than 0.1 ppm, the surface curability of the composition is insufficient; on the other hand, if the amount is more than 100 ppm, the composition easily causes foaming under the influence of moisture.

### Other Components

The curable silicone composition of the present invention may also contain adhesiveness improvers, radical reaction inhibitors, addition reaction inhibitors, and the like, depending on the purpose.

As the adhesiveness improver, from the viewpoint of imparting self-adhesiveness to the curable silicone composition of the present invention, a non-silicone organic compound, an organosilicon compound such as silane or siloxane, which contains a functional group that imparts adhesiveness, or the like is used.

Specific examples of the functional group imparting adhesiveness include alkenyl groups such as a vinyl group, an allyl group, or the like bonded to a silicon atom, epoxy groups bonded to a silicon atom via a hydrogen atom, a carbon atom (e.g., γ-glycidoxypropyl group, β-(3,4-epoxycyclohexyl) ethyl group, and the like), acryloxy groups (e.g., γ-acryloxypropyl group, and the like), or methacryloxy groups (e.g., γ-methacryloxypropyl group, and the like), and alkoxysilyl groups (e.g., alkoxysilyl groups such as trimethoxysilyl groups, triethoxysilyl groups, and methyldimethoxysilyl groups and the like bonded to a silicon atom via an alkylene group which may have one or two ester, urethane, or ether structures).

Examples of the organosilicon compound containing a functional group that imparts adhesiveness include a silane coupling agent, siloxane having an alkoxysilyl group and an organic functional group, compounds obtained by introducing an alkoxysilyl group into an organic compound having a reactive organic group, and the like.

Examples of the non-silicone organic compound include organic acid allyl esters, epoxy group ring-opening catalysts, organic titanium compounds, organic zirconium compounds, organic aluminum compounds, and the like.

Examples of radical reaction inhibitors include phenol-based radical reaction inhibitors such as BHT and amine-based radical reaction inhibitors such as diphenylamine derivatives.

Examples of the addition reaction inhibitor include phosphorus-containing compounds such as triphenylphosphine; nitrogen-containing compounds such as tributylamine, tetramethylethylenediamine, and benzotriazole; sulfur-containing compounds; acetylene compounds; hydroperoxy compounds; maleic acid derivatives; 1-ethynylcyclohexanol, 3, 5-dimethyl-1-hexyn-3-ol, ethynylmethyldecylcarbinol, 1,3,5,7-tetramethyl-1,3,5,7-tetravinylcyclotetrasiloxane, and the like.

Since the degree of the curing inhibition effect by the reaction inhibitor varies depending on the chemical structure of the reaction inhibitor, it is desirable to adjust the blended amount for each of the reaction inhibitor to be used to an optimum amount.

To improve the reinforcing properties, the curable silicone composition of the present invention may also contain, for example, inorganic fillers such as fine silica powder, crystalline silica, hollow fillers, and silsesquioxane, as well as these fillers treated to have hydrophobic surfaces by using organosilicon compounds such as organoalkoxysilane compounds, organochlorosilane compounds, organosilazane compounds, or low-molecular-weight siloxane compounds, silicone rubber powder, silicone resin powder, and the like.

### Curable Silicone Composition

The curable silicone composition of the present invention contains the components (A) to (D) described above, as well as other components as necessary.

The curable silicone composition of the present invention is such that, in an air atmosphere, the time for curing its surface is longer than the time for curing its inside. This means that the radical polymerization reaction of the component (A) by the component (B) is advanced prior to the addition reaction of the component (A) and the component (C). Because the radical polymerization reaction is thus advanced first, curing failure or foaming does not occur even in the presence of addition reaction catalyst poison or moisture on the surface of the material in contact therewith.

The time for curing the surface is preferably 1.2 or more times, more preferably 1.5 to 50 times, the time for curing the inside. If the time for curing the surface is not less than 1.2 times the time for curing the inside, curing failure and foaming can be more reliably suppressed on the material surface having addition reaction catalyst poison or moisture. If the time for curing the surface is not more than 50 times the time for curing the inside, the curing of the surface will not be excessively slow.

### Adhesive

The curable silicone composition of the present invention can be used as an adhesive. There are no particular restrictions on the adherend of the adhesive containing the curable silicone composition of the present invention, and examples thereof include metals, organic resins, and the like. By curing the curable silicone composition of the present invention on an adherend at a temperature of 150°C or less, preferably 60 to 120°C, it is possible to bond the adherend to silicone rubber.

As described above, since the curable silicone composition of the present invention has excellent curability and does not cause curing failure or foaming even when addition reaction catalyst poison or moisture is present on the surface of the adherend, the curable silicone composition of the present invention is suitably used for adhesives and the like.

### EXAMPLES

The present invention is more specifically described below with reference to Examples and Comparative Examples. However, the present invention is not limited to these Examples. The abbreviations to represent siloxane units are as follows.

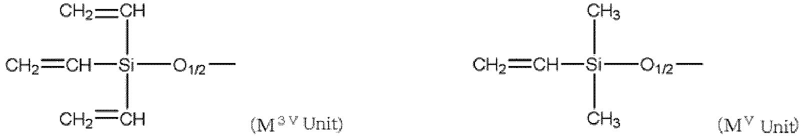

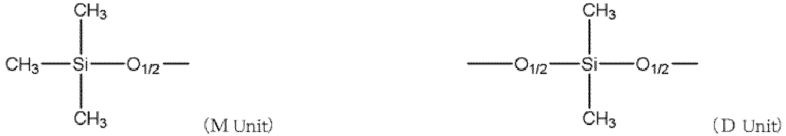

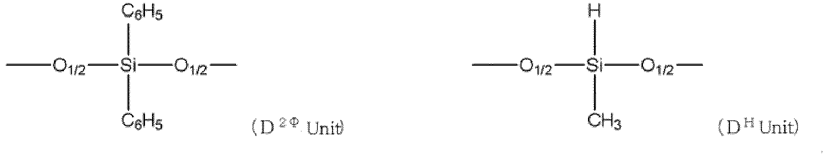

### Synthesis Example 1

500 g (vinyl group content = 80 mmol) of organopolysiloxane with a siloxane unit composition number ratio of M^{3V}:D = 2:500 and a viscosity of 10 Pa·s at 25°C, 22.9 g (SiH group content = 88 mmol) of the compound represented by the following formula (4), and 0.10 g of a toluene solution (platinum content = 0.5 % by mass) of a Karstedt catalyst (platinum (0) 1,3-divinyl-1,1,3,3-tetramethyldisiloxane complex) were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 523 g of a reaction product (A-1), which was transparent colorless oil-like.

With the ¹H NMR measurement of the reaction product (A-1), it was revealed that the SiH groups disappeared and that the obtained was an organopolysiloxane in which the SiH groups of the compound represented by the following formula (4) were attached to all of the vinyl groups.

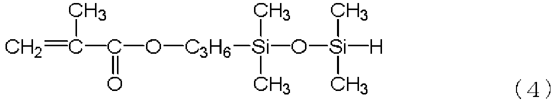

### Synthesis Example 2

500 g (vinyl group content = 54 mmol) of organopolysiloxane with a siloxane unit composition number ratio of M^{3V}:D = 2:750 and a viscosity of 30 Pa·s at 25°C, 15.4 g (SiH group content = 59 mmol) of the compound represented by the above formula (4), and 0.10 g of a toluene solution (platinum content = 0.5 % by mass) of a Karstedt catalyst were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 515 g of a reaction product (A-2), which was transparent colorless oil-like.

With the ¹H NMR measurement of the reaction product (A-2), it was revealed that the SiH groups disappeared and that the obtained was an organopolysiloxane in which the SiH groups of the compound represented by the above formula (4) were attached to all of the vinyl groups.

### Synthesis Example 3

500 g (vinyl group content = 80 mmol) of organopolysiloxane with a siloxane unit composition number ratio of M^{3V}:D:D^{2Φ} = 2:390:43 and a viscosity of 10 Pa·s at 25°C, 22.9 g (SiH group content = 88 mmol) of the compound represented by the above formula (4), and 0.10 g of a toluene solution (platinum content = 0.5 % by mass) of a Karstedt catalyst were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 523 g of a reaction product (A-3), which was transparent colorless oil-like.

With the ¹H NMR measurement of the reaction product (A-3), it was revealed that the SiH groups disappeared and that the obtained was an organopolysiloxane in which the SiH groups of the compound represented by the above formula (4) were attached to all of the vinyl groups.

### Synthesis Example 4

500 g (vinyl group content = 80 mmol) of organopolysiloxane with a siloxane unit composition number ratio of M^{3V}:D = 2:500 and a viscosity of 10 Pa·s at 25°C, 15.4 g (SiH group content = 59 mmol) of the compound represented by the above formula (4), and 0.10 g of a toluene solution (platinum content = 0.5 % by mass) of a Karstedt catalyst were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 514 g of a reaction product (A-4), which was transparent colorless oil-like.

With the ¹H NMR measurement of the reaction product (A-4), it was revealed that the SiH groups disappeared and that the obtained was an organopolysiloxane in which the SiH groups of the compound represented by the above formula (4) were attached to an average of four vinyl groups per molecule.

### Synthesis Example 5

500 g (vinyl group content = 80 mmol) of organopolysiloxane with a siloxane unit composition number ratio of M^{3V}:D = 2:500 and a viscosity of 10 Pa·s at 25°C, 7.7 g (SiH group content = 30 mmol) of the compound represented by the above formula (4), and 0.10 g of a toluene solution (platinum content = 0.5 % by mass) of a Karstedt catalyst were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 507 g of a reaction product (A-5), which was transparent colorless oil.

With the ¹H NMR measurement of the reaction product (A-5), it was revealed that the SiH groups disappeared and that the obtained was an organopolysiloxane in which the SiH groups of the compound represented by the above formula (4) were attached to an average of two vinyl groups per molecule.

### Synthesis Example 6

500 g (vinyl group content = 27 mmol) of organopolysiloxane with a siloxane unit composition number ratio of M^{V}:D = 2:500 and a viscosity of 10 Pa·s at 25°C, 7.7 g (SiH group content = 30 mmol) of the compound represented by the above formula (4), and 0.10 g of a toluene solution (platinum content = 0.5 % by mass) of a Karstedt catalyst were placed in a 1L four-necked flask equipped with a stirrer, a cooling tube, and a thermometer, followed by heating to 90°C under stirring using an oil bath. After stirring at 90°C for 3 hours, the mixture was cooled to room temperature to obtain 507 g of a reaction product (A-6), which was transparent colorless oil-like.

With the ¹H NMR measurement of the reaction product (A-6), it was revealed that the SiH groups disappeared and that the obtained was an organopolysiloxane in which the SiH groups of the compound represented by the above formula (4) were attached to all of the vinyl groups.

### Examples 1-7, Comparative Examples 1-6

Curable silicone compositions were prepared by mixing the following components in the amounts shown in Tables 1 and 2. The numerical values for each component in Tables 1 and 2 are expressed by parts by mass unless otherwise specified.

### Component (A):

(A-1) Organopolysiloxane obtained in Synthesis Example 1
(A-2) Organopolysiloxane obtained in Synthesis Example 2
(A-3) Organopolysiloxane obtained in Synthesis Example 3
(A-4) Organopolysiloxane obtained in Synthesis Example 4
(A-5) Organopolysiloxane obtained in Synthesis Example 5
(A-6) Organopolysiloxane obtained in Synthesis Example 6
(A-7) Organopolysiloxane having a siloxane unit composition number ratio of M^{3V}:D = 2:500 and a viscosity of 10 Pa·s at 25°C

### Component (B):

(B-1) 70 % by mass of citric acid tributyl acetate solution of 1,6-bis(t-butylperoxycarbonyloxy)hexane (product name: Kayalene 6-70, manufactured by Kayaku Nouryon Corporation, 10-hour half-life temperature at 0.2 mol/L in benzene = 97°C)
(B-2) 40 % by mass of xylene solution of a mixture of dibenzoyl peroxide, benzoyl-m-methylbenzoylperoxide, and m-toluoylperoxide (product name: NYPER BMT-K40, manufactured by NOF Corporation, 10-hour half-life temperature at 0.05 mol/L in benzene = 73°C)

### Component (C):

Organohydrogenpolysiloxane having a siloxane unit composition number ratio of M:D:D^{H} = 2:17:45 and a viscosity of 50 mPa·s at 25°C

### Component (D):

Toluene solution of Karstedt catalyst (platinum(0)-1,3-divinyl-1,1,3,3-tetramethyldisiloxane complex) (platinum content = 0.5 % by mass)

### Component (E):

3-methacryloxypropyltrimethoxysilane

### Component (F):

Ethynylmethyldecylcarbinol

**Table 1**

| | | Examples | | | | | | |
|---|---|---|---|---|---|---|---|---|
| | | 1 | 2 | 3 | 4 | 5 | 6 | 7 |
| Amount | (A-1) | 100 | | | 100 | | 100 | 100 |
| | (A-2) | | 100 | | | | | |
| | (A-3) | | | 100 | | | | |
| | (A-4) | | | | | 100 | | |
| | (B-1) *1 | 1 (0.7) | 1 (0.7) | 1 (0.7) | 2 (1.4) | 1 (0.7) | 14 (9.8) | |
| | (B-2) *1 | | | | | | | 0.3 (0.12) |
| | (C) | 3.6 | 2.7 | 3.5 | 3.6 | 3.6 | 3.6 | 3.6 |
| | (D) *2 | (0.9) | (0.9) | (0.9) | 0.02 (1.8) | (0.9) | (0.8) | (0.9) |
| | (E) | 1 | 1 | 1 | 1 | 1 | 1 | 1 |
| | (F) | | | | 0.01 | | | |

| | | | | | | | | |
|---|---|---|---|---|---|---|---|---|
| *1 Each value in the parentheses represents the amount (parts by mass) of the active component. *2 Each value in the parentheses represents the platinum content (mass ppm) relative to the entire composition in consideration of the amount of the platinum catalyst remaining in the component (A). | | | | | | | | |

**Table 2**

| | | Comparative Examples | | | | | |
|---|---|---|---|---|---|---|---|
| | | 1 | 2 | 3 | 4 | 5 | 6 |
| Amount | (A-1) | 100 | 100 | 100 | | | |
| | (A-5) | | | | 100 | | |
| | (A-6) | | | | | 100 | |
| | (A-7) | | | | | | 100 |
| | (B-1) *1 | 1 (0.7) | | 0.05 (0.04) | 1 (0.7) | 1 (0.7) | 1 (0.7) |
| | (C) | | 3.6 | 3.6 | 3.6 | 1.7 | 3.7 |
| | (D) *2 | (0.9) | 0.2 (10) | 0.2 (10) | (0.9) | (0.9) | 0.02 (0.9) |
| | (E) | 1 | 1 | 1 | 1 | 1 | 1 |
| | (F) | | 0.01 | 0.01 | | | 0.01 |

| | | | | | | | |
|---|---|---|---|---|---|---|---|
| *1 Each value in the parentheses represents the amount (parts by mass) of the active component. *2 Each value in the parentheses represents the platinum content (mass ppm) relative to the entire composition in consideration of the amount of the platinum catalyst remaining in the component (A). | | | | | | | |

The curable silicone compositions obtained in Examples 1 to 7 and Comparative Examples 1 to 6 were evaluated as described below, and the results are shown in Tables 3 and 4.

### Hardness

The composition was cured at 120°C for 1 hour, and allowed to stand for 24 hours under 25°C environment, and then the hardness thereof at this point was measured using a Durometer Type A hardness measurer under 25°C environment. Those with uncured surfaces were designated as "not cured".

### Deep Portion Curing Time

20 g of the composition was placed in an aluminum petri dish having a diameter of 60 mm and placed under 120°C environment. Then, the condition of the inside thereof (at least 2 mm inside from the surface) was examined at time points of 2.5, 5, 7.5, 10, 12.5, 15, 20, 25, 30, 40, 50, and 60 minutes. The time when the curing was confirmed in the portion was defined as a deep portion curing time.

### Surface Curing Time

20 g of the composition was placed in an aluminum petri dish having a diameter of 60 mm and placed under 120°C environment. Then, the curing on the surface was examined at time points of 2.5, 5, 7.5, 10, 12.5, 15, 20, 25, 30, 40, 50, and 60 minutes. The time when tack disappeared was defined as a surface curing time.

### Adhesion Test against Addition Reaction Catalyst Poison

Two aluminum plates having surfaces coated with 3-mercaptopropyltrimethoxysilane, which is a platinum group metal catalyst poison, were prepared, and each composition of 2 mm thick was sandwiched between the two aluminum plates, followed by curing by heating at 120°C for 1 hour. The two aluminum plates were peeled off, and those in which the silicone cured product underwent cohesive failure were defines as "bonded" and those in which the interface with the aluminum plate was left uncured were defined as "not cured".

### Foaming Resistance Test

A 66-nylon plate and a glass plate having been exposed to an environment of 30°C and 90% RH for 24 hours were prepared, and the above composition of 2 mm thick was sandwiched between them so that the 66-nylon was positioned at the bottom and the glass plate was positioned at the top, followed by curing by heating at 120°C for 1 hour. Those in which bubbles were visually observed through the glass surface were defined as "foamed" and those with no bubbles were defines as "no foaming".

**Table 3**

| | Examples | | | | | | |
|---|---|---|---|---|---|---|---|
| | 1 | 2 | 3 | 4 | 5 | 6 | 7 |
| Hardness | 24 | 21 | 20 | 26 | 25 | 25 | 19 |
| Time for Curing Deep Portion (min) | 10 | 10 | 7.5 | 7.5 | 12.5 | 7.5 | 10 |
| Time for Curing Surface (min) | 25 | 30 | 25 | 12.5 | 25 | 30 | 25 |
| Adhesion Test against Addition Reaction Catalyst Poison | Bonded | Bonded | Bonded | Bonded | Bonded | Bonded | Bonded |
| Foaming Resistance Test | No foaming | No foaming | No foaming | No foaming | No foaming | No foaming | No foaming |

**Table 4**

| | Comparative Examples | | | | | |
|---|---|---|---|---|---|---|
| | 1 | 2 | 3 | 4 | 5 | 6 |
| Hardness | Not cured | 29 | 30 | 25 | Not cured | 24 |
| Time for Curing Deep Portion (min) | 10 | 5 | 5 | 20 | 60 | 40 |
| Time for Curing Surface (min) | Not cured | 5 | 5 | 20 | Not cured | 10 |
| Adhesion Test against Addition Reaction Catalyst Poison | Bonded | Not cured | Bonded | Bonded | Bonded | Bonded |
| Foaming Resistance Test | No foaming | Foamed | Foamed | Foamed | No foaming | Foamed |

As shown in Table 3, it was revealed that the curable silicone compositions of Examples 1-7 are characterized by exhibiting excellent surface curability and, in particular, excellent curability in the deep portion; accordingly, these curable silicone compositions were not left uncured or lost adhesiveness in the presence of addition reaction catalyst poison, and do not generate foaming even if the adherend contained moisture.

On the other hand, as shown in Table 4, in Comparative Example 1 in which the component (C) was not used, the surface was not cured. Further, in Comparative Example 2 in which the component (B) was not used, curing inhibition occurred due to the addition reaction catalyst poison, and foaming occurred under the influence of the moisture in the adherend. Furthermore, in Comparative Example 3 in which the amount of the component (B) was small, the time for curing the deep portion and the time for curing the surface were the same, and foaming occurred under the influence of the moisture.

Further, in Comparative Examples 4-6 using an unsaturated group-containing organopolysiloxane that had a small number of methacrylic groups and fell out of the range of the component (A), the time for curing the deep portion was significantly long in all cases. In Comparative Examples 4 and 6, the radical reaction was slow due to the small amount of methacrylic groups within one molecule of (A-5) and (A-7), and the addition reaction between the unsaturated group and the SiH group was advanced first, thus inducing foaming under the influence of moisture. In Comparative Example 5, both the radical reaction of the methacrylic groups and the addition reaction between the unsaturated group and the SiH group were significantly slow, and curing was insufficient.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A curable silicone composition, comprising:
(A) an organopolysiloxane in an amount of 100 parts by mass, the organopolysiloxane being an addition reaction product of (a) a compound represented by the following general formula (1) and (b) a compound represented by the following general formula (2), and having an average of 4 or more methacrylic groups within one molecule; 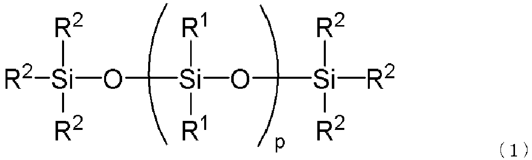 wherein p is an integer of 10 or more, R¹ is independently a substituted or unsubstituted monovalent organic group having 1 to 12 carbon atoms, and R² is independently an alkenyl group having 2 to 12 carbon atoms, 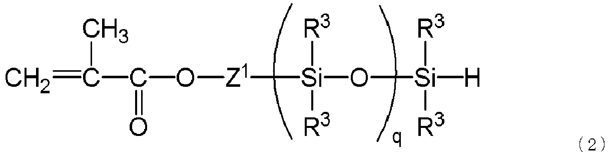 wherein q is an integer of 0 to 20, R³ is independently a substituted or unsubstituted monovalent organic group having 1 to 12 carbon atoms, and Z¹ is a substituted or unsubstituted divalent organic group having 1 to 10 carbon atoms,
(B) an organic peroxide in an amount of 0.1 to 10 parts by mass;
(C) an organohydrogenpolysiloxane in an amount of 0.1 to 20 parts by mass, the organohydrogenpolysiloxane having at least two hydrogen atoms bonded to a silicon atom within one molecule; and
(D) a platinum group metal catalyst in such an amount that platinum group metal is contained in an amount of 0.1 to 100 mass ppm relative to the entire composition.

2. The curable silicone composition according to claim 1, wherein the component (A) is a reaction product of a hydrosilylation reaction of the component (a) and the component (b) with a platinum group metal catalyst.

3. The curable silicone composition according to claim 1 or 2, wherein, in an air atmosphere, the time for curing its surface is longer than the time for curing its inside.

4. An adhesive comprising the curable silicone composition according to any one of claims 1 to 3.
